(19) **Europäisches Patentamt / European Patent Office / Office européen des brevets**

(11) **EP 2 099 123 B1**

(12) **FASCICULE DE BREVET EUROPEEN**

(45) Date de publication et mention de la délivrance du brevet:
**20.06.2012  Bulletin 2012/25**

(51) Int Cl.:
***H02P 3/18*** *(2006.01)*

(21) Numéro de dépôt: **09154220.9**

(22) Date de dépôt: **03.03.2009**

(54) **Procédé de transformation des tensions aux bornes des enroulements d'un moteur électrique monophasé à induction et condensateur permanent**

Spannungsumwandlungsverfahren an den Klemmen der Wicklungen eines Einphasen-Elektroinduktionsmotors und Betriebskondensator

Method for transforming voltages at the terminals of the windings of a single-phase electric motor with permanent condenser and induction

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité:  **05.03.2008  FR 0801206**

(43) Date de publication de la demande:
**09.09.2009  Bulletin 2009/37**

(73) Titulaire: **Somfy SAS**
**74300 Cluses (FR)**

(72) Inventeurs:
- **Pillon, Laurent**
  **74130 BONNEVILLE (FR)**
- **Scrivo, David**
  **74800 LA ROCHE SUR FORON (FR)**

(74) Mandataire: **Bugnion Genève**
**Bugnion S.A.**
**Conseils en Propriété Industrielle**
**Route de Florissant 10**
**Case Postale 375**
**1211 Genève 12 (CH)**

(56) Documents cités:
**EP-A- 0 551 053    EP-A- 0 966 085**
**EP-A- 1 721 860    EP-A- 1 742 348**
**WO-A-01/73913    FR-A- 2 753 847**
**FR-A- 2 770 699**

Remarques:
Le dossier contient des informations techniques présentées postérieurement au dépôt de la demande et ne figurant pas dans le présent fascicule.

**Description**

L'invention concerne un procédé de transformation de tensions aux bornes des enroulements d'un moteur électrique monophasé à induction et condensateur permanent. Elle concerne aussi un procédé de commande d'un tel moteur et un procédé de contrôle, de surveillance ou de détermination de la charge d'un tel moteur. Elle concerne encore un dispositif de transformation de tension et un dispositif de surveillance ou de détermination de la charge d'un actionneur comprenant un moteur électrique à courant alternatif à induction utilisé pour manoeuvrer un élément mobile de fermeture, d'occultation, de protection solaire ou d'écran dans un bâtiment. Elle concerne enfin un dispositif de commande d'un tel moteur et un actionneur comprenant l'un de ces dispositifs.

Certains actionneurs destinés à être installés dans les bâtiments et destinés à la manoeuvre d'éléments de fermeture, d'occultation, de protection solaire ou d'écran (tels que par exemple des volets roulants, des portes, des portails ou des stores) comprennent un moteur à induction (ou moteur asynchrone) monophasé à condensateur permanent.

Ces actionneurs sont alimentés par le réseau alternatif, par exemple 230 V 50 Hz. Outre le moteur, ils sont munis d'un frein d'immobilisation assurant le blocage de l'actionneur quand le moteur n'est pas alimenté, et d'un réducteur dont l'arbre de sortie constitue l'arbre de sortie de l'actionneur et entraîne l'élément mobile.

Il est important de pouvoir mesurer des variations de la charge vue par l'actionneur, afin d'en déduire des situations particulières de l'élément mobile : arrivée sur une butée, rencontre d'un obstacle.

A cet effet, il est connu d'analyser la tension aux bornes du condensateur permanent. La demande de brevet EP 1 269 596 décrit un dispositif de transformation de la tension aux bornes du condensateur permanent par redressement, soustraction d'une composante continue et division avant traitement d'analyse des variations.

Le brevet EP 0 551 053 décrit le redressement double alternance puis filtrage par condensateur d'une tension issue de la tension aux bornes du condensateur permanent, abaissée par transformateur.

Le brevet EP 0 966 085 décrit un mode de surveillance de la tension du secteur, associé à l'analyse de paramètres moteurs tels que la tension aux bornes du condensateur permanent, de manière à ne pas tenir compte de cette analyse si l'amplitude des alternances positives de la tension secteur varie brusquement (micro-coupure ou nouvelle valeur de l'amplitude).

Le brevet FR 2 770 699 décrit un dispositif d'arrêt dans lequel on combine deux grandeurs respectivement représentatives de l'amplitude de la tension aux bornes de l'enroulement principal et de l'amplitude de la tension aux bornes de l'enroulement secondaire. L'analyse des variations porte sur la grandeur combinée.

La demande de brevet FR 2 753 847 décrit un circuit de surveillance de la tension aux bornes de chaque enroulement et comprenant, pour chaque enroulement, un transformateur d'isolement et un montage lisseur atténuateur pour fournir une tension continue image de la tension alternative présente aux bornes de l'enroulement considéré.

La demande de brevet EP 1 721 860 décrit la comparaison de la tension aux bornes de l'enroulement auxiliaire à la tension issue d'un circuit de simulation de la branche auxiliaire incluant le condensateur permanent afin de mettre en évidence des écarts liés à la charge de l'actionneur.

La demande de brevet EP 1 742 348 décrit une unité de contrôle de couple connectée d'une part à une masse électrique et d'autre part aux deux bornes de phase du moteur. Les deux tensions mesurées par l'unité de contrôle de couple sont donc respectivement égales à la tension aux bornes du premier bobinage et à la tension aux bornes du deuxième bobinage. Il est réalisé une intégration numérique, soit de la tension auxiliaire, soit de la tension aux bornes du condensateur permanent, cette dernière étant réalisée par soustraction des mesures instantanées ou par mesure directe de la tension présente entre les deux entrées de mesure de l'unité de contrôle de couple. Cependant, aucune information n'est donnée sur la réalisation de cette unité de contrôle de couple, et il n'est fait mention que d'intégration sur les alternances positives des tensions.

Tous ces dispositifs présentent l'inconvénient d'un traitement long : soit parce qu'il est utilisé des tensions redressées et filtrées, soit parce qu'il est utilisé des tensions simple alternance qui empêchent une durée de traitement inférieure à la période du secteur. De plus, les dispositifs décrits en détail combinent les amplitudes de tension et non les tensions alternatives elles-mêmes.

Le but de l'invention est de fournir un procédé de transformation de tensions remédiant aux inconvénients précités et améliorant les procédés de transformation connus de l'art antérieur. En particulier, l'invention propose un procédé de transformation de tensions alternatives en des tensions images pouvant être converties par un convertisseur analogique-numérique.

Le procédé de transformation selon l'invention est défini par la revendication 1.

Selon l'invention, le procédé de détermination est défini par la revendication 2.

Différents modes d'exécution du procédé sont définis par les revendications 3 et 4.

Selon l'invention, le dispositif de transformation est défini par la revendication 5.

Différents modes de réalisation du dispositif sont définis par les revendications 6 à 8.

Selon l'invention, le dispositif de détermination est défini par la revendication 9.

Selon l'invention, l'actionneur de manoeuvre est défini par la revendication 10.

Le dessin annexé représente, à titre d'exemple, des modes d'exécution des procédés de transformation, de détermination et de commande selon l'invention et des modes de réalisation de dispositifs de détermination et de commande selon l'invention.

La figure 1 est un schéma d'un mode de réalisation d'un actionneur selon l'invention.

Les figures 2 à 4 décrivent des variantes de réalisation d'un générateur de tension continue utilisé dans l'invention.

La figure 5 décrit un procédé de transformation des tensions instantanées utilisées dans le procédé de détermination de la charge selon l'invention.

La figure 6 décrit un procédé de détermination de la charge selon l'invention.

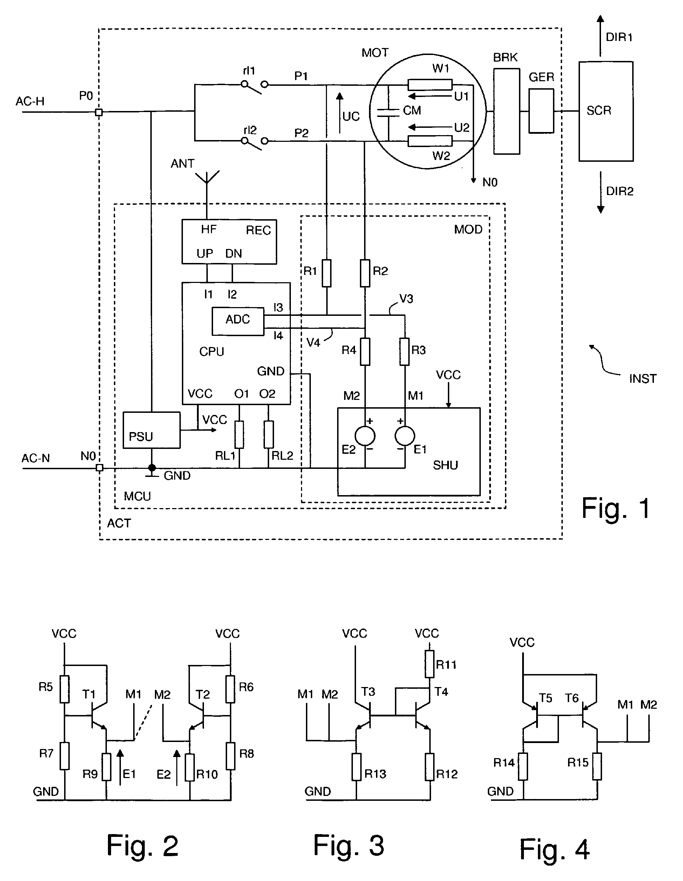

L'actionneur ACT représenté schématiquement à la figure 1 permet d'entraîner un élément mobile SCR de fermeture, d'occultation ou de protection solaire équipant un bâtiment. Cet élément peut être déplacé selon deux sens opposés par rotation d'un moteur à induction MOT dans un premier sens de rotation et dans un deuxième sens de rotation. L'actionneur est alimenté par le réseau de distribution électrique entre un conducteur de phase AC-H et un conducteur de neutre AC-N. L'élément mobile peut par exemple être un volet roulant, un portail ou un store de terrasse, entraîné dans une première direction DIR1 et entraîné dans une deuxième direction DIR2.

Le moteur MOT est de type asynchrone, monophasé, à condensateur de déphasage CM permanent, également dit « moteur à induction ». Il comprend deux enroulements W1 et W2. Selon le sens de rotation désiré, le condensateur CM est disposé en série avec le premier enroulement W1 ou avec le deuxième enroulement W2. On désigne par P1 et P2 les points de raccordement du condensateur CM avec chacun des enroulements W1 et W2. Les deux autres extrémités des enroulements sont reliées par une borne N0 au conducteur de neutre AC-N.

Un frein d'immobilisation BRK est associé au moteur MOT dont il bloque le rotor en absence de courant dans les enroulements.

Quand le rotor du moteur MOT tourne, il entraîne un réducteur GER, dont l'étage de sortie entraîne un arbre constituant la sortie mécanique de l'actionneur. Il est à noter que la liaison entre cet arbre de sortie et l'élément mobile SCR n'est pas nécessairement rigide.

La liaison entre le conducteur de phase AC-H et les enroulements W1 et W2 du moteur sont effectués au moyen de deux interrupteurs rl1 et rl2 commandés par un circuit électronique de pilotage MCU (ou dispositif de commande de moteur) qui comprend divers moyens assurant la commande de l'actionneur, c'est-à-dire des moyens de réception et d'interprétation des ordres reçus, des moyens d'alimentation de l'actionneur et des moyens de coupure de cette alimentation soit par ordre soit lorsqu'une butée est détectée. Les deux interrupteurs rl1 et rl2 ont une connexion commune, reliée au conducteur de phase en une borne de phase P0 de l'actionneur. Les autres connexions des interrupteurs sont respectivement raccordées aux points de raccordement P1 et P2.

Le pilotage des interrupteurs commandés résulte d'ordres de commande transmis par radiofréquences.

Le circuit électronique de pilotage MCU comprend une unité logique de traitement CPU, telle qu'un microcontrôleur. Ce circuit comprend un circuit d'alimentation PSU, typiquement un convertisseur abaisseur, dont une entrée est reliée à la borne de phase P0 et dont l'autre entrée est reliée à la borne de neutre N0 et constitue la masse électrique GND du circuit électronique de pilotage. La tension continue régulée VCC du circuit d'alimentation alimente l'unité logique de traitement CPU et, de manière non représentée, un récepteur radiofréquences REC.

Ce récepteur radiofréquences REC comprend une entrée HF raccordée à une antenne ANT, et deux sorties logiques UP et DN, respectivement raccordées à deux entrées logiques I1 et I2 de l'unité logique de traitement CPU. Par des moyens connus de l'homme du métier, le récepteur radiofréquences interprète le signal radio reçu pour générer, s'il y a lieu un état logique haut sur la première sortie UP ou un état logique haut sur la deuxième sortie DN, selon que le signal reçu véhicule un ordre de montée ou un ordre de descente.

Selon l'état d'une table d'affectation logée dans la mémoire de l'unité logique de traitement CPU, une activation de la première entrée I1 provoque un ordre de fermeture de l'interrupteur commandé rl1 alors qu'une activation de la deuxième entrée I2 provoque un ordre de fermeture de l'interrupteur commandé rl2. Sous l'effet d'une commande de montée UP, le moteur tourne donc dans le sens provoquant le déplacement de l'écran dans la direction DIR1.

L'unité logique de traitement comprend une première sortie O1 alimentant une première bobine de relais RL1 et une deuxième sortie 02 alimentant une deuxième bobine de relais RL2. Ces bobines agissent respectivement sur un premier contact de relais constituant l'interrupteur rl1 et sur un deuxième contact de relais constituant l'interrupteur rl2.

Selon la bobine de relais alimentée, le moteur MOT tourne dans l'un ou l'autre sens. Cette disposition permet à l'unité logique de traitement de provoquer l'arrêt du moteur même en présence d'un ordre de mouvement donné par l'interrupteur inverseur.

D'autres moyens que des relais sont utilisables, par exemple des triacs ou des transistors.

L'unité logique de traitement CPU comprend un convertisseur analogique-numérique ADC muni de deux entrées analogiques, de préférence multiplexées : une troisième entrée I3 et une quatrième entrée 14. Ce convertisseur admet des tensions d'entrée positives, comprises entre 0 et +Vcc. Alternativement, l'unité logique de traitement peut présenter plusieurs convertisseurs analogique-numérique.

Le circuit électronique de pilotage MCU comprend ou constitue un dispositif de détermination de la charge du moteur électrique. Le circuit électronique de pilotage MCU comprend également un dispositif MOD de transformation de tensions. Ce dispositif de détermination comprend deux diviseurs potentiométriques.

Un premier diviseur potentiométrique est constitué par une première résistance R1 disposée en série avec une troisième résistance R3. Le point commun à ces deux résistances est raccordé à la troisième entrée 13. L'autre extrémité de la première résistance R1 est raccordée au premier point de raccordement P1.

Un deuxième diviseur potentiométrique est constitué par une deuxième résistance R2 disposée en série avec une quatrième résistance R4. Le point commun à ces deux résistances est raccordé à la quatrième entrée 14. L'autre extrémité de la deuxième résistance R2 est raccordée au deuxième point de raccordement P2.

Le dispositif de transformation comprend également une unité de décalage de tensions SHU, raccordée d'une part à la masse électrique GND, et d'autre part à la tension continue régulée VCC du circuit d'alimentation. Cette unité de décalage de tensions applique une première composante continue positive E1 sur une première masse décalée M1 et une deuxième composante continue positive E2 sur une deuxième masse décalée M2. Les extrémités libres de la troisième résistance R3 et de la quatrième résistance R4 sont respectivement raccordées à la première masse décalée M1 et à la deuxième masse décalée M2.

Préférentiellement, les deux composantes continues ont la même valeur.

Les deux masses décalées peuvent alors ne constituer qu'un seul point.

Cette valeur commune est préférentiellement égale à la moitié de la plage d'alimentation, soit +Vcc/2.

Plusieurs variantes d'unité de décalage de tensions sont représentées aux figures 2 à 4. Ces montages sont connus de l'homme du métier.

La figure 2 représente une première variante dans laquelle un premier transistor T1 est monté en collecteur commun raccordé à la tension continue régulée VCC. Le potentiel de base du premier transistor est fixé par un pont diviseur R5, R7 et la composante continue positive E1 est obtenue aux bornes d'une résistance d'émetteur R9, l'émetteur du premier transistor constituant la première masse décalée M1.

Un montage identique avec un deuxième transistor T2, un pont diviseur R6, R8 et une résistance d'émetteur R10 donne accès à la deuxième masse décalée M2.

Seul le premier transistor sera utilisé si les deux masses décalées sont confondues, la liaison de la deuxième masse décalée M2 étant alors représentée par un trait pointillé.

Si on néglige la tension base-émetteur du transistor, la composante continue positive est égale au potentiel du pont diviseur. Il suffit alors de prendre deux résistances égales pour R5 et R7 afin d'obtenir une composante continue égale à Vcc/2.

La figure 3 représente une deuxième variante dans laquelle les deux masses décalées M1 et M2 sont réunies sur l'émetteur d'un troisième transistor T3 monté en collecteur commun. Le collecteur de T3 est raccordé à la tension continue régulée VCC. Une résistance d'émetteur R13 est branchée entre l'émetteur de T3 et la masse électrique GND. La base de T3 est reliée à la base d'un quatrième transistor T4 et au collecteur de celui-ci, également relié à la tension continue régulée VCC à travers une résistance R11. L'émetteur de T4 est relié à la masse électrique GND à travers une résistance R12.

Pour une faible valeur de Vcc (par exemple 3.3V), il faut tenir compte de la tension base-émetteur (voisine de 0.6V), et on a par exemple respectivement 9.1, 15.2 et 1.5 en kilo-ohms pour les résistances R11, R12 et R13.

Les deux transistors T3 et T4 sont préférentiellement appairés dans un même boîtier, par exemple destiné à former un miroir de courant. Ainsi est réalisée l'égalité des tensions base-émetteur de chaque transistor, ce qui présente l'avantage, par rapport aux montages de la figure 2, d'une auto-compensation des variations de la tension base-émetteur avec la température.

Comme pour la variante de la figure 2, les deux potentiels des masses M1 et M2 peuvent chacun être obtenus par un montage différent, les deux montages étant indépendants.

La figure 4 représente une troisième variante dans laquelle les deux masses décalées M1 et M2 sont réunies sur le collecteur d'un sixième transistor T6 monté en miroir de courant avec un cinquième transistor T5. Ce collecteur est relié à la masse électrique GND à travers une résistance de réglage de tension R15.

Les transistors sont de type PNP. Les deux émetteurs sont communs et raccordés à la tension continue régulée VCC. Les deux bases sont raccordées entre elles et au collecteur du cinquième transistor T5, ce point étant raccordé à la masse électrique GND à travers une résistance de réglage de courant R14. Si on néglige la tension base-émetteur, l'intensité dans la résistance de réglage de courant R14 est égale à Vcc/R14, et une intensité égale passe dans la résistance de réglage de tension R15. La composante continue positive E, prise aux bornes de cette résistance est donc égale à Vcc.R15/R14. Il suffit que R15 soit moitié de R14 pour avoir une composante continue positive voisine de +Vcc/2.

Sur ce modèle, une réalisation dérivée de la troisième variante consiste à prendre deux miroirs de courant séparés, l'un pour la première masse décalée M1, l'autre pour la deuxième masse décalée M2.

Dans toutes les variantes, un condensateur de filtrage ou de découplage, non représenté, est avantageusement disposé en parallèle sur les résistances aux bornes desquelles est prélevée la composante continue (R9, R10, R13, R15).

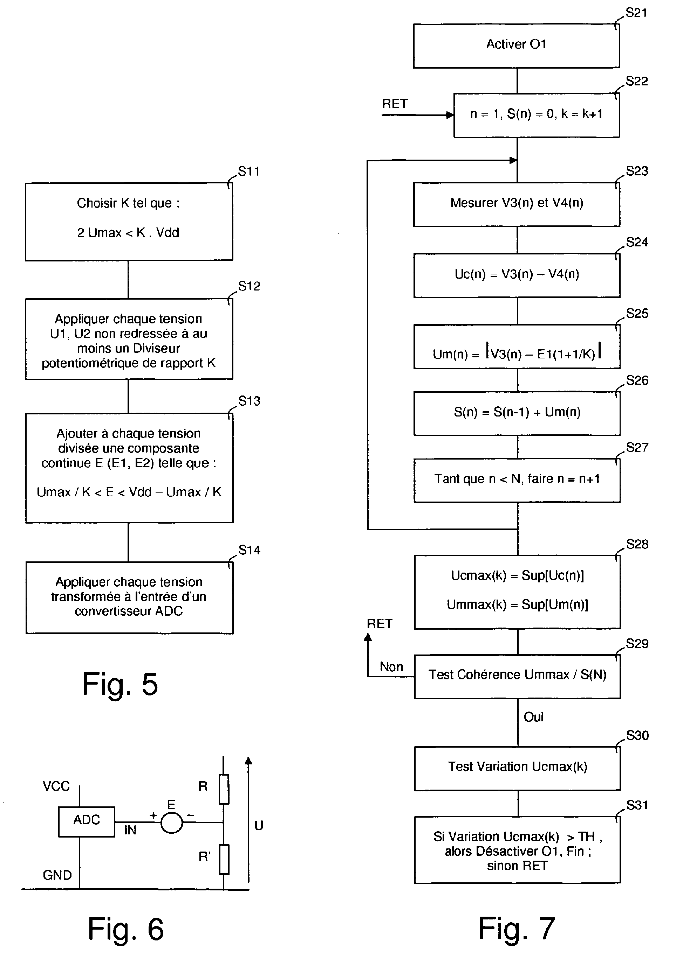

La figure 5 décrit un procédé de transformation des tensions instantanées utilisées dans le procédé de détermination de la charge selon l'invention, en référence à la figure 6. Le but d'un tel procédé est de transformer des tensions initiales non redressées U1 et U2 en des tensions images V3, V4 de signe constant et d'amplitude limitée pour qu'elles puissent attaquer le convertisseur analogique-numérique. Ainsi, l'unité logique de traitement a connaissance des valeurs des tensions V3 et V4. Cette unité logique de traitement ayant également connaissance de la fonction mathématique liant les tensions initiales aux tensions images, il est possible pour celle-ci de déterminer les tensions initiales, et, en conséquence, de déterminer la charge du moteur. Cependant, il est possible dans certains cas de s'affranchir du calcul des tensions initiales, notamment lorsqu'on s'intéresse aux variations de celles-ci.

Dans une première étape S11, on détermine l'amplitude de tension Umax pouvant être prise par la tension instantanée aux bornes du premier ou du deuxième enroulement du moteur et on détermine une plage de tension Vdd admissible par le convertisseur analogique-numérique ADC. Cette plage de tension est par exemple comprise entre 0 et +Vcc, soit Vdd = Vcc. On choisit un rapport K tel que K x Vdd soit supérieur à 2Umax.

Dans une deuxième étape S12, on applique chaque tension aux bornes des enroulements, sans la redresser, à au moins un diviseur potentiométrique de rapport K. Ce diviseur potentiométrique est par exemple constitué de résistances R et R' sur la figure 6, telles que R1 et R3 pour la tension U1 et telles que R2 et R4 pour la tension U2 sur la figure 1. On peut également utiliser un diviseur de type capacitif.

Dans une troisième étape S13, on ajoute à chaque tension divisée une composante continue E telle que E soit supérieure à Umax/K et inférieure à (Vdd - Umax/K). On obtient alors une tension transformée qu'on applique à l'entrée analogique IN du convertisseur ADC lors d'une quatrième étape S14.

La figure 6 décrit un montage de principe utilisé dans l'invention. La tension U est la tension aux bornes d'un enroulement du moteur et se trouve appliquée aux résistances R et R' disposées en série, l'extrémité libre de R' constituant la masse électrique GND du montage et du convertisseur analogique ADC, celui-ci étant alimenté par une ligne VCC sous la tension +Vcc référencée par rapport à la masse électrique GND. Un générateur continu est disposé en série entre le point commun des résistances R et R' et l'entrée analogique IN du convertisseur et présente une composante continue E. Ainsi, les tensions aux bornes des enroulements sont d'abord divisées, puis on leur ajoute la composante continue. Ainsi, les tensions initiales U1 et U2 aux bornes des enroulements sont transformées par une fonction affine.

Préférentiellement, les valeurs de composantes continues E1 et E2 relatives à chaque voie de mesure sont égales. Cependant, on peut admettre qu'elles soient différentes puisqu'il est possible de les mesurer individuellement en absence de tension appliquée au moteur.

Le schéma de la figure 1 est un mode de réalisation préféré qui reproduit le principe de la figure 6.

Si on prend le potentiel V3 de l'entrée I3, référencé par rapport à la masse électrique GND, et si on désigne par K1 le rapport (R1+R3)/R3, on a :

$$V3 = E1 + (U1-E1)/K1 = U1/K1 + E1(1-1/K1) = U1/K1 + E'1$$

de même, avec K2 le rapport (R2+R4)/R4, on a :

$$V4 = E2 + (U2-E2)/K2 = U2/K2 + E2(1-1/K2) = U2/K2 + E'2$$

avec préférentiellement égalité de K1 avec K2, et de E1 avec E2.

Une telle relation entre les tensions initiales U1, U2 et les tensions images V3, V4 permet par la connaissance des tensions images V3, V4 et, si nécessaire, par l'utilisation d'une fonction inverse de déterminer les valeurs des tensions initiales.

L'utilisation d'une fonction affine pour obtenir les tensions images à partir des tensions initiales est préférée. Néanmoins, il est possible d'utiliser toute fonction injective (et a fortiori bijective), cette fonction étant injective (ou bijective) de l'intervalle des valeurs prises par les tensions initiales vers un intervalle de valeurs de signe constant et dont les valeurs absolues sont majorées.

Les valeurs absolues des tensions images sont par exemple majorées par une fraction de l'amplitude maximale des tensions initiales ou par une valeur constante par exemple comprise entre 1 et 3 V et de préférence 1.65 V. Cette valeur de majoration est choisie en fonction du convertisseur analogique-numérique : elle est inférieure ou égale à valeur limite de tension admise par le convertisseur et préférentiellement égale à la moitié de cette tension.

L'utilisation d'une fonction injective garantit de pouvoir déterminer la valeur de tension initiale à partir de la connaissance d'une tension image. En pratique, on utilise une fonction bijective.

Dans le cas du mode de réalisation de la figure 1, les valeurs des composants R1, R2, R3, R4, E1 et E2 sont bien sûr choisies en conséquence pour permettre une transformation adéquate des tensions. La figure 7 décrit un procédé de détermination de la charge selon l'invention.

Dans une première étape S21 du procédé de détermination, la première sortie O1 est activée par l'unité logique de traitement CPU, suite à la réception d'un ordre de montée par le récepteur radiofréquences. Le moteur est alors alimenté dans le sens correspondant et il apparaît simultanément deux tensions U1 et U2 aux bornes des enroulements. Ces tensions sont appelées tensions initiales dans la présente demande.

Dans une deuxième étape S22, on initialise à 1 un compteur d'échantillons n dans l'alternance secteur considérée, on initialise à 0 une somme d'échantillons S(n) ayant valeur d'intégrale de la tension secteur sur l'alternance, et on incrémente un compteur d'alternances secteur k. Préférentiellement, la deuxième étape est synchronisée par le passage à zéro de la tension secteur, c'est-à-dire la tension U1 si c'est le relais RL1 qui est alimenté.

Dans une troisième étape S23, on mesure chacune des tensions transformées, présentes sur les entrées I3 et I4 du convertisseur, soit V3(n) et V4(n). Dans une quatrième étape S24, on fait la différence de ces valeurs pour obtenir une valeur courante image de la tension instantanée aux bornes du condensateur Uc(n). Si une même composante continue E (E1 = E2 = E) est utilisée dans le procédé de transformation, l'image Uc est exactement proportionnelle à UC, qu'on ait utilisé le montage de la figure 6 ou celui de la figure 1, tandis qu'elle est décalée d'un facteur constant (E1-E2) dans le cas contraire. Un tel décalage est sans importance dans la suite du procédé.

Dans une cinquième étape S25, on détermine la valeur absolue de la valeur courante image de la tension secteur Um(n) en soustrayant la composante continue. Si une grande précision est recherchée, on tient compte d'un facteur correctif 1/K dans le cas où le montage de la figure 1 est préféré à celui de la figure 6. Une telle précision est a priori inutile.

Dans une sixième étape S26, on met à jour l'intégrale de la tension secteur sur l'alternance, par simple sommation de la valeur courante de Um(n) à la somme précédente S(n-1).

On procède ainsi, échantillon par échantillon, sur toute la durée d'une alternance secteur, c'est-à-dire pendant une demi-période de la tension secteur, soit 10 ms en 50 Hz. A raison d'un échantillon par milliseconde, le nombre N d'échantillons est donc égal à 10. La septième étape S27 permet de boucler vers la troisième étape S23 tant qu'une alternance complète n'a pas été parcourue. Cette alternance est référencée le contenu k du compteur d'alternances.

Lors d'une huitième étape S28, on détermine l'amplitude Ucmax(k) comme étant la plus forte valeur prise par la tension image de la tension aux bornes du condensateur. Alternativement, cette valeur est déterminée par interpolation utilisant un algorithme de lissage, ce qui donnera une meilleure précision. On procède de même pour l'amplitude Ummax (k) de la tension image de la tension secteur.

Une neuvième étape S29 porte sur un test de cohérence entre l'amplitude de la tension secteur telle que déterminée à l'étape précédente et sur l'amplitude théorique telle que résultant de la valeur d'intégrale. La sommation S(N) doit normalement donner une valeur égale à N fois la valeur moyenne, soit N fois $2U_{mmax} / \pi$.

Si cette relation n'est pas vérifiée, au moins avec une marge suffisante, alors c'est l'indication d'une perturbation sur le secteur, par exemple un parasite énergétique ou encore une microcoupure, qui oblige à ne pas tenir compte des résultats de mesure sur l'alternance en cours. Dans ce cas, le procédé boucle sur la deuxième étape S22 (flèche RET).

Si le test de cohérence est positif, alors on passe à la dixième étape S30 dans laquelle l'amplitude de la tension condensateur (ou plutôt son image) Ucmax(k) est comparée à celle des alternances précédentes pour en déduire une variation éventuelle due à une buté ou un obstacle.

Dans une dernière étape S31, en comparant la variation (ou plusieurs types de variation) à un seuil TH, ou à plusieurs seuils, on procède à l'arrêt du moteur par désactivation de la première sortie O1 si le seuil est dépassé. On passe à l'alternance suivante dans le cas contraire, par retour à la deuxième étape S22.

Cette analyse de variation utilise les procédés de l'art antérieur, notamment en prenant comme référence un extremum ou un plateau récent des alternances précédentes. Cependant, elle est deux fois plus précise et/ou rapide que dans l'art antérieur, faisant intervenir à la fois les alternances positives et les alternances négatives.

Du fait de déformations harmoniques de la tension secteur, on peut de plus traiter séparément les variations relatives aux alternances positives et les variations relatives aux alternances négatives.

L'étape de test de cohérence donne une grande robustesse au procédé, vis-à-vis de perturbations secteurs de toute origine, et en particulier dues à la transmission de signaux radioélectriques sur le secteur.

Comme on peut le constater à la lecture de cette description, le procédé de transformation de tension permet en particulier de pouvoir surveiller et déterminer en permanence les tensions aux bornes des enroulements d'un moteur asynchrone à condensateur permanent c'est-à-dire même lorsque ces tensions sont négatives. Ainsi, la durée de procédures de détermination de charge du moteur peut être sensiblement limitée.

**Revendications**

1. Procédé de transformation de deux tensions initiales (U1, U2) aux bornes des enroulements (W1, W2) d'un moteur (MOT) électrique monophasé à induction et condensateur permanent (CM) d'un actionneur (ACT) de manoeuvre d'une charge mobile (SCR) d'une installation domotique (INST), **caractérisé en ce qu'**il comprend, pour chacune des tensions initiales, une étape de division de la tension initiale par un rapport constant (K1, K2) puis une étape d'ajout d'une composante continue.

2. Procédé de détermination de la charge d'un moteur (MOT) électrique monophasé à induction et condensateur permanent (CM) d'un actionneur (ACT) de manoeuvre d'une charge mobile (SCR) d'une installation domotique (INST), **caractérisé en ce qu'**il comprend une phase de transformation d'échantillons de tensions initiales (U1, U2) aux bornes des enroulements (W1, W2) du moteur en échantillons de tensions images (V3, V4) par mise en oeuvre du procédé de transformation selon la revendication 1 et une phase de traitement des images des échantillons de tensions.

3. Procédé de détermination selon la revendication 2, **caractérisé en ce qu'**il est exécuté lors de chaque demi-période d'une des tensions initiales.

4. Procédé de détermination selon la revendication 2 ou 3, **caractérisé en ce qu'**il n'est pas tenu compte d'un résultat d'une phase de traitement des échantillons de tensions images si un test témoigne d'une incohérence entre une valeur moyenne d'échantillons de la tension secteur et une valeur maximum issue des échantillons de la tension secteur.

5. Dispositif de transformation (MOD) de deux tensions initiales (U1, U2) aux bornes des enroulements (W1, W2) d'un moteur électrique monophasé à induction et condensateur permanent (CM) d'un actionneur de manoeuvre d'une charge mobile (SCR) d'une installation domotique (INST), **caractérisé en ce qu'**il comprend des moyens matériels (R1, R2, R3, R4, E1, E2, SHU) et/ou logiciels de mise en oeuvre une étape de division de la tension initiale par un rapport constant ($k_1$, $k_2$) puis une étape d'ajout d'une composante continue.

6. Dispositif de transformation selon la revendication 5, **caractérisé en ce qu'**il comprend, pour chaque enroulement du moteur, un diviseur de tension (R1, R3 ; R2, R4) et un générateur de tension continue (E1, E2) pouvant être commun aux deux enroulements.

7. Dispositif de transformation selon la revendication 6, **caractérisé en ce que** le diviseur de tension est du type potentiométrique formé de deux éléments (R1, R2, R3, R4) disposés mutuellement en série, l'un des éléments étant raccordé au point (P1, P2) de raccordement du condensateur moteur avec un des enroulements, le diviseur étant en série avec le générateur de tension continue dont l'extrémité libre est reliée au point commun (N0) des deux enroulements et constituant une masse électrique (GND) du montage, tandis que chaque point commun aux deux éléments est raccordé à une entrée (13, 14) d'un convertisseur analogique-numérique (ADC) référencé à la masse électrique.

8. Dispositif de transformation selon l'une des revendications 6 à 7, **caractérisé en ce que** le générateur continu comprend un transistor (T1, T2, T3, T4, T5, T6) ou un miroir de courant.

9. Dispositif de détermination (MCU) de la charge d'un moteur (MOT) électrique monophasé à induction et condensateur permanent (CM) d'un actionneur (ACT) de manoeuvre d'une charge mobile (SCR) d'une installation domotique (INST), **caractérisé en ce qu'**il comprend un dispositif de transformation (MOD) selon l'une des revendications 5 à 8.

10. Actionneur (ACT) de manoeuvre d'une charge mobile d'une installation domotique, **caractérisé en ce qu'**il comprend un dispositif de transformation (MOD) selon l'une des revendications 5 à 9 ou un dispositif (MCU) de détermination de la charge d'un moteur électrique selon la revendication 10.

**Claims**

1. Method for transforming two initial voltages (U1, U2) at the terminals of the windings (W1, W2) of a single-phase and permanent capacitor (CM) induction electric motor of an actuator (ACT) for operating a moving load (SCR) of a home-automation installation (INST), **characterized in that** it comprises, for each of the initial voltages, a division step for dividing the initial voltage by a constant ratio (K1, K2) then a step for adding a DC component.

2. Method for determining the load of a single-phase and permanent capacitor (CM) induction electric motor (MOT) of an actuator (ACT) for operating a moving load (SCR) of a home-automation installation (INST), **characterized in that** it comprises a phase for transforming samples of initial voltages (U1, U2) at the terminals of the windings (W1, W2) of the motor into samples of image voltages (V3, V4) by implementing the transformation method according to Claim 1 and a phase for processing the images of the voltage samples.

3. Determination method according to Claim 2, **characterized in that** it is executed during each half-period of one of the initial voltages.

4. Determination method according to Claim 2 or 3, **characterized in that** a result of a phase for processing the samples of image voltages is not taken into account if a test indicates an inconsistency between an average value of samples of the mains voltage and a maximum value obtained from the samples of the mains voltage.

5. Device (MOD) for transforming two initial voltages (U1, U2) at the terminals of the windings (W1, W2) of a single-phase and permanent capacitor (CM) induction electric motor of an actuator for operating a moving load (SCR) of a home-automation installation (INST), **characterized in that** it comprises hardware means (R1, R2, R3, R4, E1, E2, SHU) and/or software means for implementing a division step for dividing the initial voltage by a constant ratio ($K_1$, $K_2$), then a step for adding a DC component.

6. Transformation device according to Claim 5, **characterized in that** it comprises, for each winding of the motor, a voltage divider (R1, R3; R2, R4) and a DC voltage generator (E1, E2) that can be common to both windings.

7. Transformation device according to Claim 6, **characterized in that** the voltage divider is of the potentiometer type formed by two elements (R1, R2, R3, R4) arranged mutually in series, one of the elements being connected to the point (P1, P2) of connection of the motor capacitor with one of the windings, the divider being in series with the DC voltage generator, the free end of which is linked to the common point (NO) of the two windings and forming an electrical ground (GND) of the circuit, whereas each point common to the two elements is connected to an input (I3, I4) of an analogue-digital converter (ADC) referenced to the electrical ground.

8. Transformation device according to one of Claims 6 and 7, **characterized in that** the DC generator comprises a transistor (T1, T2, T3, T4, T5, T6) or a current mirror.

9. Device (MCU) for determining the load of a single-phase and permanent capacitor (CM) induction electric motor (MOT) of an actuator (ACT) for operating a moving load (SCR) of a home-automation installation (INST), **characterized in that** it comprises a transformation device (MOD) according to one of Claims 5 to 8.

10. Actuator (ACT) for operating a moving load of a home-automation installation, **characterized in that** it comprises a transformation device (MOD) according to one of Claims 5 to 9 or a device (MCU) for determining the load of an electric motor according to Claim 10.

**Patentansprüche**

1. Verfahren zur Umwandlung von zwei Anfangsspannungen (U1, U2) an den Klemmen der Wicklungen (W1, W2) eines einphasigen Elektroinduktionsmotors (MOT) mit Betriebskondensator (CM) eines Stellantriebs (ACT) zur Betätigung einer beweglichen Last (SCR) einer Domotikanlage (INST), **dadurch gekennzeichnet, dass** es für jede der Anfangsspannungen einen Schritt der Teilung der Anfangsspannung durch ein konstantes Verhältnis (K1, K2) und dann einen Schritt des Hinzufügens einer durchgehenden Komponente enthält.

2. Verfahren zur Bestimmung der Last eines einphasigen Elektroinduktionsmotors (MOT) mit Betriebskondensator (CM) eines Stellantriebs (ACT) zur Betätigung einer beweglichen Last (SCR) einer Domotikanlage (INST), **dadurch**

**gekennzeichnet, dass** es eine Phase der Umwandlung von Tastproben von Anfangsspannungen (U1, U2) an den Klemmen der Wicklungen (W1, W2) des Motors in Tastproben von Bildspannungen (V3, V4) durch Anwendung des Umwandlungsverfahrens nach Anspruch 1 und eine Phase der Verarbeitung der Bilder der Spannungstastproben enthält.

3. Bestimmungsverfahren nach Anspruch 2, **dadurch gekennzeichnet, dass** es in jeder Halbperiode einer der Anfangsspannungen ausgeführt wird.

4. Bestimmungsverfahren nach Anspruch 2 oder 3, **dadurch gekennzeichnet, dass** kein Ergebnis einer Verarbeitungsphase der Bildspannungstastproben berücksichtigt wird, wenn ein Test eine Inkohärenz zwischen einem Mittelwert von Tastproben der Netzspannung und einem von den Tastproben der Netzspannung stammenden maximalen Wert zeigt.

5. Vorrichtung zur Umwandlung (MOD) von zwei Anfangsspannungen (U1, U2) an den Klemmen der Wicklungen (W1, W2) eines einphasigen Elektroinduktionsmotors mit Betriebskondensator (CM) eines Stellantriebs zur Betätigung einer beweglichen Last (SCR) einer Domotikanlage (INST), **dadurch gekennzeichnet, dass** sie Hardware- (R1, R2, R3, R4, E1, E2, SHU) und/oder Softwareeinrichtungen zur Durchführung eines Schritts der Teilung der Anfangsspannung durch ein konstantes Verhältnis (K1, K2), und dann eines Schritts der Hinzufügung einer durchgehenden Komponente enthält.

6. Umwandlungsvorrichtung nach Anspruch 5, **dadurch gekennzeichnet, dass** sie für jede Wicklung des Motors einen Spannungsteiler (R1, R3; R2, R4) und einen Gleichspannungsgenerator (E1, E2) enthält, der beiden Wicklungen gemeinsam sein kann.

7. Umwandlungsvorrichtung nach Anspruch 6, **dadurch gekennzeichnet, dass** der Spannungsteiler von der Art Potentiometer ist, der von zwei miteinander in Reihe geschalteten Elementen (R1, R2, R3, R4) gebildet wird, wobei eines der Elemente an den Anschlusspunkt (P1, P2) des Motorkondensators an eine der Wicklungen angeschlossen ist, wobei der Teiler mit dem Gleichspannungsgenerator in Reihe geschaltet ist, dessen freies Ende mit dem gemeinsamen Punkt (NO) der zwei Wicklungen verbunden ist und eine elektrische Masse (GND) der Schaltung bildet, während jeder den zwei Elementen gemeinsame Punkt an einen Eingang (I3, I4) eines Analog-Digital-Wandlers (ADC) angeschlossen ist, der auf die elektrische Masse referenziert ist.

8. Umwandlungsvorrichtung nach einem der Ansprüche 6 bis 7, **dadurch gekennzeichnet, dass** der Gleichspannungsgenerator einen Transistor (T1, T2, T3, T4, T5, T6) oder einen Stromspiegel enthält.

9. Vorrichtung zur Bestimmung (MCU) der Last eines einphasigen Elektroinduktionsmotors (MOT) mit Betriebskondensator (CM) eines Stellantriebs (ACT) zur Betätigung einer beweglichen Last (SCR) einer Domotikanlage (INST), **dadurch gekennzeichnet, dass** sie eine Umwandlungsvorrichtung (MOD) nach einem der Ansprüche 5 bis 8 enthält.

10. Stellantrieb (ACT) zur Betätigung einer beweglichen Last einer Domotikanlage, **dadurch gekennzeichnet, dass** er eine Umwandlungsvorrichtung (MOD) nach einem der Ansprüche 5 bis 9 oder eine Vorrichtung (MCU) zur Bestimmung der Last eines Elektromotors nach Anspruch 10 enthält.

Fig. 1

Fig. 2

Fig. 3

Fig. 4

**S11** — Choisir K tel que :

$$2\,U_{max} < K \cdot V_{dd}$$

**S12** — Appliquer chaque tension U1, U2 non redressée à au moins un Diviseur potentiométrique de rapport K

**S13** — Ajouter à chaque tension divisée une composante continue E (E1, E2) telle que :

$$U_{max} / K < E < V_{dd} - U_{max} / K$$

**S14** — Appliquer chaque tension transformée à l'entrée d'un convertisseur ADC

## Fig. 5

VCC

ADC  IN  + E −  R

GND  U  R'

## Fig. 6

**S21** — Activer O1

**S22** — RET → $n = 1, S(n) = 0, k = k+1$

**S23** — Mesurer V3(n) et V4(n)

**S24** — $Uc(n) = V3(n) - V4(n)$

**S25** — $Um(n) = |V3(n) - E1(1+1/K)|$

**S26** — $S(n) = S(n-1) + Um(n)$

**S27** — Tant que n < N, faire n = n+1

**S28** — $Ucmax(k) = Sup[Uc(n)]$
$Ummax(k) = Sup[Um(n)]$

**S29** — RET ← Non — Test Cohérence Ummax / S(N)

Oui

**S30** — Test Variation Ucmax(k)

**S31** — Si Variation Ucmax(k) > TH, alors Désactiver O1, Fin ; sinon RET

## Fig. 7

**RÉFÉRENCES CITÉES DANS LA DESCRIPTION**

**Documents brevets cités dans la description**

- EP 1269596 A
- EP 0551053 A
- EP 0966085 A
- FR 2770699
- FR 2753847
- EP 1721860 A
- EP 1742348 A